# EUROPEAN PATENT APPLICATION

(11) **EP 4 633 216 A1**
(43) Date of publication of application: **15.10.2025**
(21) Application number: 23962527.0
(22) Date of filing: 25.12.2023
(51) Int. Cl.: H04W 12/06, H04W 12/60

(54) **WIRELESS COMMUNICATION METHOD EXECUTED BY MEANS OF AUTHORIZED ENTITY, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); CHEN, Jingran, Dongguan, Guangdong 523860 (CN)
(74) Representative: Mewburn Ellis LLP
(86) International application number: PCT/CN2023/141593
(87) International publication number: WO 2025/137829

(57) **Abstract**

A method for wireless communication performed by an authorization entity and a communication device are provided. The method includes the following. Authorization information of a terminal device is obtained. Whether to authorize an artificial intelligence (AI)/machine learning (ML) service request related to the terminal device is determined based on the authorization information. The AI/ML service request is used for requesting transmission of information associated with AI/ML services to the terminal device, and/or the AI/ML service request is used for requesting acquisition of information of the terminal device for AI/ML operations. In the present disclosure, the authorization entity determines, based on the authorization information of the terminal device, whether to authorize the AI/ML service request related to the terminal device, which clarifies an authorization mechanism related to the AI/ML service request, thereby preventing the information related to the AI/ML services from being obtained by attackers.

## Description

### TECHNICAL FIELD

This disclosure relates to the field of communication technology, in particular to a method for wireless communication performed by an authorization entity and a communication device.

### BACKGROUND

With the development of science and technology, the introduction of artificial intelligence (Al)/machine learning (ML) technology has become a development trend in communication systems. In communication systems, application of the AI/ML technology may involve transmission of AI/ML-related information between different communication devices. However, the AI/ML-related information is an important asset of AI/ML technology providers, and thus it is necessary to ensure the legality of recipients of the AI/ML-related information. As such, it is crucial to establish an authorization mechanism for the AI/ML-related information.

### SUMMARY

A method for wireless communication performed by an authorization entity and a communication device are provided in the present disclosure. Various aspects involved in the present disclosure will be introduced below.

In a first aspect, a method for wireless communication performed by an authorization entity is provided. The method includes the following. Authorization information of a terminal device is obtained. Whether to authorize an artificial intelligence (Al)/machine learning (ML) service request related to the terminal device is determined based on the authorization information. The AI/ML service request is used for requesting transmission of information associated with AI/ML services to the terminal device, and/or the AI/ML service request is used for requesting acquisition of information of the terminal device for AI/ML operations.

In a second aspect, an authorization entity is provided. The authorization entity includes an obtaining module and an authorization module. The obtaining module is configured to obtain authorization information of a terminal device. The authorization module is configured to determine, based on the authorization information, whether to authorize an AI/ML service request related to the terminal device. The AI/ML service request is used for requesting transmission of information associated with AI/ML services to the terminal device, and/or the AI/ML service request is used for requesting acquisition of information of the terminal device for AI/ML operations.

In a third aspect, a system for wireless communication is provided. The system for wireless communication includes a first network element. The first network element is configured to obtain authorization information of a terminal device based on an AI/ML service request related to the terminal device. The first network element is configured to determine, based on the authorization information, whether to authorize the AI/ML service request. The AI/ML service request is used for requesting transmission of information associated with AI/ML services to the terminal device, and/or the AI/ML service request is used for requesting acquisition of information of the terminal device for AI/ML operations.

In a fourth aspect, a communication device is provided. The communication device includes a memory and a processor. The memory is configured to store a program. The processor is configured to invoke the program stored in the memory, to cause the communication device to perform the method in the first aspect.

In the present disclosure, the authorization entity determines, based on the authorization information of the terminal device, whether to authorize the AI/ML service request related to the terminal device, which clarifies an authorization mechanism related to the AI/ML service request, thereby preventing the information related to the AI/ML services from being obtained by attackers.

### BRIEF DESCRIPTION OF THE DRAWINGS

FIG. 1 is a schematic structural diagram illustrating a system for wireless communication to which embodiments of the present disclosure are applicable.
FIG. 2 is a schematic flowchart illustrating transmission of an AI/ML model in the same operator network.
FIG. 3 is a schematic flowchart illustrating transmission of an AI/ML model in different operator networks.
FIG. 4 is a schematic flowchart illustrating a method for wireless communication performed by an authorization entity provided in an embodiment of the present disclosure.
FIG. 5 is an exemplary diagram illustrating a method for wireless communication performed by an authorization entity provided in an embodiment of the present disclosure.
FIG. 6 is a schematic flowchart illustrating a method for wireless communication performed by an authorization entity provided in another embodiment of the present disclosure.
FIG. 7 is a schematic flowchart illustrating a method for wireless communication performed by an authorization entity provided in another embodiment of the present disclosure.
FIG. 8 is a schematic flowchart illustrating a method for wireless communication performed by an authorization entity provided in another embodiment of the present disclosure.
FIG. 9A to FIG. 9B are schematic flowcharts illustrating a method for wireless communication performed by an authorization entity provided in another embodiment of the present disclosure.
FIG. 10 is a schematic flowchart illustrating a method for wireless communication performed by an authorization entity provided in another embodiment of the present disclosure.
FIG. 11 is a schematic structural diagram of an authorization entity provided in embodiments of the present disclosure.
FIG. 12 is a schematic structural diagram of a system for wireless communication provided in embodiments of the present disclosure.
FIG. 13 is a schematic structural diagram of a communication apparatus provided in embodiments of the present disclosure.

### DETAILED DESCRIPTION

Technical solutions in the present disclosure will be illustrated below in conjunction with accompanying drawings.

### Architecture of a communication system

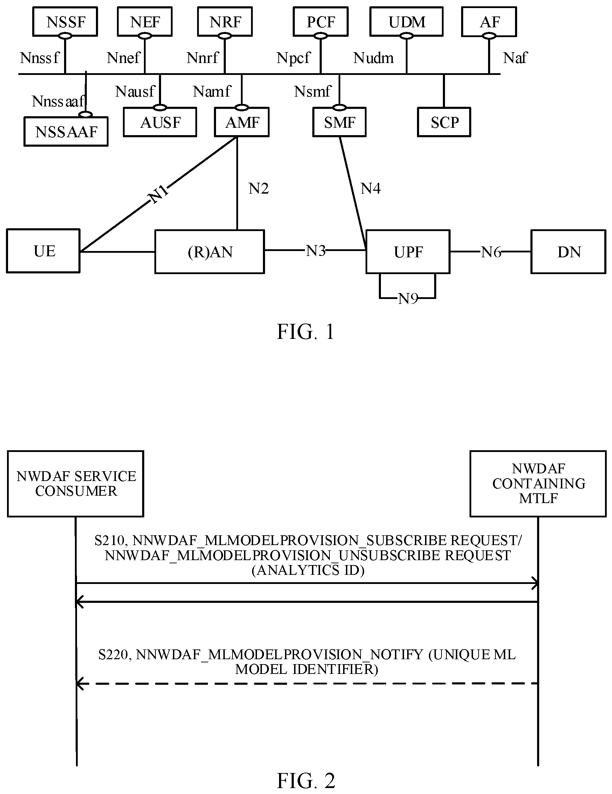

FIG. 1 is a schematic diagram of an architecture of a communication system to which embodiments of the present disclosure are applicable. The network architecture may include a terminal device, an access network (AN) network element, and a core network (CN) network element.

It may be understood that, the technical solutions of embodiments of the present disclosure may be applicable to various communication systems, such as: a 5th generation (5G) system or a new radio (NR) system, a long-term evolution (LTE) system, an LTE frequency division duplex (FDD) system, an LTE time division duplex (TDD) system, etc. The technical solutions provided in the present disclosure may also be applicable to future communication systems, such as a sixth generation (6G) mobile communication system, a satellite communication system, etc.

The terminal device in embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless CN network element, a user agent, a user device, etc. The terminal device in embodiments of the present disclosure may be a device that provides voice and/or data connectivity to a user and is capable of connecting people, objects, and machines, such as a handheld device with a wireless connection function, a vehicle-in device, etc. The terminal device in embodiments of the present disclosure may be a mobile phone, a pad, a laptop computer, a tablet computer, a mobile internet device (MID), a wearable device, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. Optionally, the terminal device may be used to act as a base station. For example, the terminal device may act as a scheduling entity that provides a sidelink signal between terminal devices in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The AN network element may be an AN device. The AN device may be an access device over which terminals wirelessly access the network architecture. The device is primarily responsible for radio resource management on an air interface side, quality of service (QoS) management, data compression, encryption, etc. The AN device may be referred to as a radio access network (RAN) device, such as a base station. The base station may broadly cover various names in the following, or may be interchangeable with one of the following names, for example, an NodeB, an evolved NodeB (eNB), a next generation NodeB (gNB), a relay station, an access point, a transmitting and receiving point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, or the like. The base station may be a macro base station, a micro base station, a relay node, a donor node, or the like, or a combination thereof. Alternatively, the base station may be a communications module, a modem, or a chip disposed in the device or apparatus mentioned above. Alternatively, the base station may be a mobile switching center, a device that functions as a base station in device-to-device (D2D), vehicle-to-vehicle (V2V), vehicle-to-everything (V2X), and machine-to-machine (M2M) communications, a network-side device in a 6G network, a device that functions as a base station in a future communications system, or the like. The base station may support networks of the same or different access technologies. A specific technology and a specific device form that are used by the network device are not limited in embodiments of this application.

The base station may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another base station.

In some deployments, the AN device in embodiments of the present disclosure may be a CU or a DU, or the AN device includes a CU and a DU. The gNB may further include an AAU.

The CN network element may include a user plane function (UPF) network element, an access and mobility management function (AMF) network element, a session management function (SMF) network element, a policy control function (PCF) network element, an application function (AF), a data network (DN), a network slice selection function (NSSF), an authentication server function (AUSF), a unified data management (UDM), a network exposure function (NEF), a network repository function (NRF), a network slice-specific authentication and authorization function (NSSAAF). In addition, some networks (such as 5G networks) have added a network data analytics function (NWDAF) in the CN. NWDAF may be further divided into an analytics logical function (AnLF) and a model training logical function (MTLF). In some communication systems (such as 5G systems), the CN element may also be referred to as a network function (NF).

Each network element in FIG. 1 may be a network element in a hardware device, a software function running on dedicated hardware, or a virtualized function implemented on a platform (e.g., a cloud platform). It may be noted that, the network architecture illustrated in the above figure is only an example of network elements included in the entire network architecture. The network elements included in the entire network architecture are not limited in embodiments of the present disclosure.

Those skilled in the art may understand that the network architecture illustrated in FIG. 1 does not constitute a limitation on the network architecture. In a specific implementation, the network architecture may include more or fewer network elements than those illustrated in the figure, or a combination of some network elements, etc. It may be understood that, in FIG. 1, AN or RAN is represented in the form of (R)AN.

In some scenarios, the network device and the terminal device may be deployed on land, which includes indoor or outdoor, handheld, wearable, or in-vehicle, may be deployed on water, or may be deployed in the air (such as airplanes, balloons, satellites, etc.). The scenarios in which the network device and the terminal device are located are not limited in embodiments of the present disclosure.

### Artificial intelligence (Al)/machine learning (ML) services in a communication system

In a communication system, AI/ML services may include AI/ML services for application layer enhancement and AI/ML services for communication capabilities enhancement (also referred to as "AI enhancement"). In the communication system, some assisted capabilities are provided to support application layer AI/ML operations, such as AI/ML operation splitting between AI/ML endpoints, AI/ML model/data distribution and sharing, or distributed/federated learning. For the AI/ML service for application layer enhancement, aspects such as how to design QoS to meet transmission, how to select UEs to participate in federated learning, etc., may be considered. The main application cases of the AI enhancement may include channel state information (CSI) feedback enhancement, beam management enhancement, and positioning accuracy enhancement.

The CSI feedback enhancement mainly refers to CSI compression in a spatial frequency domain by using AI/ML models on both sides. The AI/ML models on both sides may be two-side models jointly trained on one single side (a terminal device side or a network side). Federated training means that both forward propagation and backward propagation are trained for a generation model and a reconstruction model in the same loop. The federated training may be performed either on one single node or across multiple nodes through gradient exchange between the nodes. The federated training may include the following: federated training of the two-side models at the network side and at the terminal device side, respectively, or separate training of the two-side models at the network side and at the terminal device side, e.g., training of the CSI generation part at the terminal device side, and training of the CSI reconstruction part at the network side.

The beam management enhancement mainly refers to spatial domain beam prediction or temporal domain beam prediction by using an AI/ML model. The training and derivation of an AI/ML model may be performed at the network side or at the terminal device side.

The positioning accuracy enhancement may include direct positioning and assisted positioning by using an AI/ML model.

### Transmission of an AI/ML model in a communication system

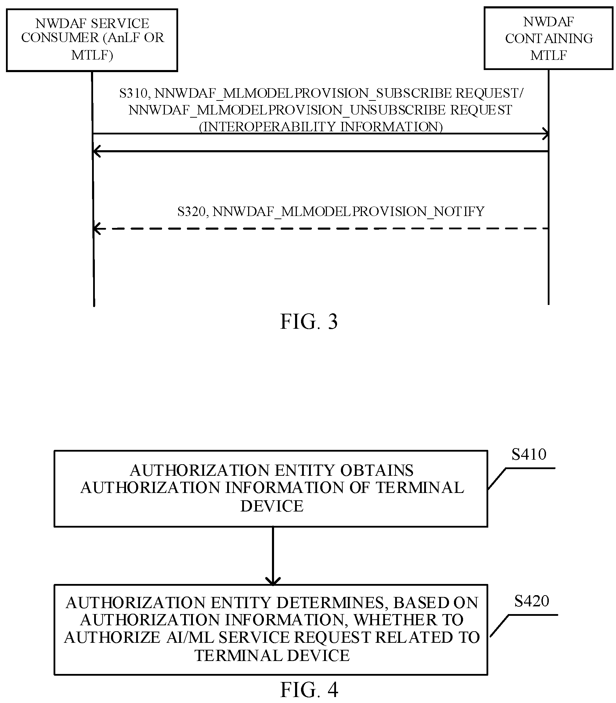

The AI/ML services may involve transmission of AI/ML model-related information (including an AI/ML model and related information of the AI/ML model) between different devices. Generally, the AI/ML model-related information may be transmitted in an operator network. As illustrated in FIG. 2, the AI/ML model-related information may be transmitted in the same operator network. At S210, an NWDAF service consumer may subscribe/unsubscribe an ML model to another NWDAF (an NWDAF containing MTLF) through related service requests, such as an Nnwdaf_MLModelProvision_Subscribe request or an Nnwdaf_MLModelProvision_Unsubscribe request. At S220, the NWDAF may respond to the above request through related messages, such as an Nnwdaf_MLModelProvision_Notify message. The NWDAF service consumer may carry an analytics identity (ID) in the service request, and the NWDAF may notify the NWDAF service consumer of ML model information (e.g., a unique ML model identifier) in the service response. As illustrated in FIG. 3, the model-related information may also be transmitted in different operator networks. At S310, an NWDAF service consumer may subscribe/unsubscribe an ML model to another NWDAF (an NWDAF containing MTLF) through an Nnwdaf_MLModelProvision_Subscribe request and an Nnwdaf_MLModelProvision_Unsubscribe request. At S320, the NWDAF may respond to the request through an Nnwdaf_ML_ModelProvision_Notify message. The NWDAF service consumer may carry ML model interoperability information in the service request, to support the transmission of an ML model between multiple operators. The information may be operator-specific information (e.g., a requested model format, model execution environment, etc.).

With the development of AI/ML services, a terminal device may also participate in AI/ML model training, and thus the AI/ML model-related information may also be transmitted between the network and the terminal device. For example, in the CSI feedback enhancement or the beam management enhancement, the AI/ML model-related information may be transmitted between the terminal device and a gNB, between the terminal device and the network side, or between the terminal device and a server application. For another example, in the positioning accuracy enhancement, the AI/ML model-related information may be transmitted between the terminal device and a location management function (LMF) of a positioning network element at the network side, or between the terminal device and the server applicable.

In addition, regardless of the AI/ML services for application layer enhancement or the AI/ML services for communication capabilities enhancement, in order to help the terminal device perform AI/ML operations, the network may also transmit some assisted information related to the AI/ML services to the terminal device. For example, the network may provide network conditions (e.g., bitrate, latency, reliability, network performance analysis, etc.) per terminal device to an AF and a client of the terminal device, to assist the AI/ML operations.

However, the AI/ML model-related information and the network-assisted information are important assets of model providers (such as operators). As such, it is crucial to ensure the legality of the terminal device accessing such information. Otherwise, there is a risk that attackers may steal an AI/ML model at the network side and related information of the AI/ML model as well as the network-assisted information at the network side.

Based on the above problems, embodiments of the present disclosure are introduced in detail below.

As illustrated in FIG. 4, a method for wireless communication performed by an authorization entity is provided in embodiments of the present disclosure. The authorization entity is an entity at a network side, and the authorization entity may be the network element in the CN, such as an NWDAF, a gateway mobile location center (GMLC), an LMF, an AMF, etc. Alternatively, the authorization entity may also be the network element in the AN, such as a base station, etc. Alternatively, the authorization entity may also be an operation administration and maintenance (OAM) network element.

The method illustrated in FIG. 4 may include operations at S410 to S420.

At S410, the authorization entity obtains authorization information of a terminal device. The authorization information may be stored locally in the authorization entity, and thus the authorization entity may perform local retrieval to obtain the authorization information. Alternatively, the authorization information may be stored in an entity other than the authorization entity (hereinafter referred to as "authorization information storage entity"), and thus the authorization entity may request acquisition of the authorization information from the authorization information storage entity. As an example, the authorization information may be stored in a UDM or a unified data repository (UDR) in the CN.

At S420, the authorization entity determines, based on the authorization information, whether to authorize an AI/ML service request related to the terminal device. The AI/ML service request is used for requesting transmission of information associated with AI/ML services to the terminal device, and/or the AI/ML service request is used for requesting acquisition of information of the terminal device for AI/ML operations. The AI/ML operations may refer to operations related to an AI/ML model, such as performing AI/ML model training. The authorization information may be determined based on subscription data of the terminal device, and/or the authorization information may also be determined based on an indication from the terminal device.

The AI/ML services may refer to AI/ML model-involved services or operations, and may include the AI/ML services for application layer enhancement or the AI/ML services for communication capabilities enhancement. The AI/ML services for communication capabilities enhancement may include AI/ML model-based positioning services, AI/ML model-based CSI feedback services, and AI/ML model-based beam management services, etc.

The information associated with the AI/ML services may include AI/ML model-related information and/or network-assisted information. The AI/ML model-related information may include an AI/ML model, the AI/ML model-related information, etc. The network-assisted information may be used for assisting the AI/ML services, and may include the network condition of the terminal device, network performance analysis, information for assisting AI/ML model training, etc. For example, the network-assisted information may include communication link quality, QoS analysis, NWDAF prediction information, etc. The information associated with the AI/ML services may be stored in the authorization entity, or may be stored in another entity other than the authorization entity (hereinafter referred to as "AI/ML service information storage entity"). For example, the AI/ML service information storage entity may be a network element such as an NWDAF, an LMF, an OAM, etc. If the authorization entity does not store the information associated with the AI/ML services, the authorization entity may request acquisition of the information associated with the AI/ML services from the AI/ML service information storage entity. It may be worth noting that, based on the request from the authorization entity, the AI/ML service information storage entity may also determine, based on the authorization information, whether to authorize the AI/ML service request.

The AI/ML service request may be triggered by the authorization entity, and the authorization entity may trigger the AI/ML service request in the AI/ML services. For example, in AI/ML model-based positioning services, the authorization entity may actively trigger the AI/ML service request to obtain information of the terminal device for AI/ML operations. Alternatively, the AI/ML service request may also be triggered by an entity other than the authorization entity (hereinafter referred to as the "AI/ML service request entity"). The AI/ML service request entity may be a network element in the CN, a terminal device, an external server, an external client, etc. For example, the terminal device may trigger the AI/ML service request through registration. For another example, in the AI/ML model-based positioning services, the terminal device may initiate the AI/ML service request to the authorization entity, to request acquisition of the AI/ML model for positioning services. Alternatively, in the AI/ML model-based positioning services, a positioning client and a CN network element such as an NWDAF, etc., may also initiate the AI/ML service request to the authorization entity, to request transmission of the AI/ML model to the terminal device to obtain location information of the terminal device. For yet another example, in AI/ML model-based CSI feedback services or AI/ML model-based beam management services, the terminal device may trigger the AI/ML service request through reporting AI/ML capability information to the authorization entity, to request acquisition of the AI/ML model-related information and the network-assisted information. For still another example, a network element storing the AI/ML model (such as a gNB, an OAM, an NWDAF, etc.,) may also initiate the AI/ML service request to the authorization entity, to request acquisition of the information of the terminal device (such as QoS, terminal mobility information, terminal IP address, etc.) for the AI/ML model training.

In the present disclosure, the authorization entity determines, based on the authorization information of the terminal device, whether to authorize the AI/ML service request related to the terminal device, which clarifies an authorization mechanism related to the AI/ML service request, thereby preventing the information related to the AI/ML services from being obtained by attackers.

The content of the authorization information is illustrated in detail below. The authorization information may include AI/ML subscription data of the terminal device and/or AI/ML configuration information of the terminal device.

The AI/ML subscription data of the terminal device may refer to subscription data of the terminal device for the AI/ML services. The AI/ML subscription data may include information related to a public land mobile network (PLMN) in which the terminal device is allowed to use the AI/ML services, and/or information related to the AI/ML services that are allowed to be used by the terminal device.

The PLMN in which the terminal device is allowed to use the AI/ML services may refer to a PLMN in which the terminal device is authorized to use the AI/ML services, or a PLMN in which the terminal device is authorized to use a specific AI/ML service. The information related to the PLMN in which the terminal device is allowed to use the AI/ML services may be represented by a PLMN set or a PLMN list.

The information related to the AI/ML services that are allowed to be used by the terminal device may include at least one of: information indicating that the terminal device is allowed to use the AI/ML services, AI/ML model information, and a service type to which the AI/ML model is applicable. The information indicating that the terminal device is allowed to use the AI/ML services may be information indicating that the terminal device is authorized to obtain the AI/ML model. The AI/ML model information may include a storage location of the AI/ML model, a model ID of the AI/ML model, a type of the AI/ML model, a version of the AI/ML model, etc. The service type to which the AI/ML model is applicable may include AI/ML model-based positioning services, AI/ML model-based CSI services, AI/ML model-based beam management services, AI/ML model-based energy-saving services, AI/ML model-based mobility optimization services, etc.

The AI/ML subscription data may be determined based on the subscription data of the terminal device. For example, the AI/ML subscription data may be formed by the operator based on subscription data of a subscriber and maintained by the operator. Therefore, the terminal device or an AF cannot change the AI/ML subscription data directly, but can change the AI/ML subscription data through updating the subscription data. For example, the terminal device can change the AI/ML subscription data through changing operator's packages.

The AI/ML configuration information of the terminal device may also be referred to as "AI/ML profile", and may include information indicating whether the terminal device is allowed for AI/ML model transmission, and/or information indicating whether the terminal device is allowed for AI/ML model training. Generally, a model type that the terminal device can support is related to the capabilities, computational power, and storage limitation of the terminal device. However, the state of the terminal device may change, and thus a model that the terminal device can support may also change. In addition, due to the mobility of the terminal device, an applicable area of a training model may also change. Alternatively, in some cases, the terminal device cannot support a high-precision model. Therefore, when the authorization entity determines whether to transmit the information associated with the AI/ML services to the terminal device, the authorization entity may also determine, based on state information of the terminal device, whether the terminal device supports AI/ML model training and/or transmission. However, since some state information (such as power level, computational power, storage limitation) of the terminal device belongs to privacy information of the terminal device and cannot be obtained by the network side, the network side cannot determine whether the terminal device can be used for model transmission and/or model training for a certain period. Therefore, the network side can determine, based on the AI/ML configuration information, whether the terminal device can be used for model transmission and/or model training, which is conducive to protecting the privacy of the terminal device.

The AI/ML configuration information may be determined based on an indication from the terminal device. For example, the terminal device may trigger an update of the AI/ML configuration information via a non-access stratum (NAS) message. For another example, an authorized AF updates the AI/ML configuration information for the terminal device through the NEF. Further, when the terminal device is prohibited from model transmission or model training, the terminal device may report to the network side an indication indicative of prohibiting model transmission or model training, and update the authorization information of the terminal device through updating the AI/ML configuration information of the terminal device.

It may be worth noting that, in some embodiments, the AI/ML configuration information may also be determined based on location service (LCS) privacy configuration information. For example, when the AI/ML services are AI/ML model-based positioning services, the authorization entity may determine, based on LCS privacy configuration information of the terminal device, the AI/ML configuration information of the terminal device. The LCS privacy configuration information of the terminal device may be obtained from an LCS privacy profile of the terminal device. Further, the AI/ML configuration information may include a location privacy indication (LPI) in the LCS privacy configuration information, and the LPI may indicate whether the terminal device is allowed to perform AI/ML model-based positioning operation. The LPI may be an AI based location privacy indication (AILPI) specifically for the AI/ML services, or may be an original LPI in the LCS privacy profile.

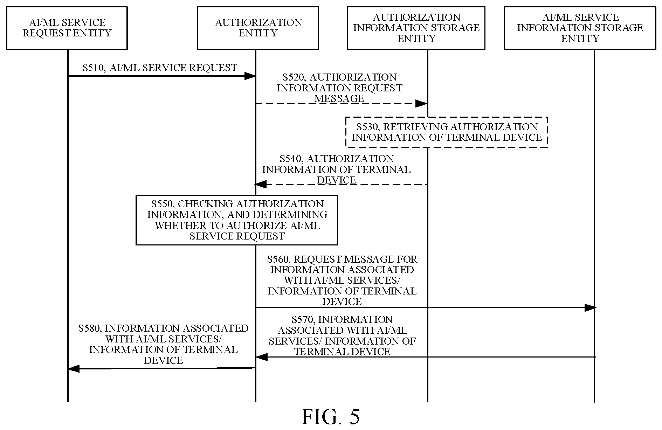

With reference to FIG. 5, a method for wireless communication performed by an authorization entity in embodiments of the present disclosure is exemplified. Exemplarily, in the method illustrated in FIG. 5, authorization information and information associated with AI/ML services are stored in an entity other than the authorization entity, and an AI/ML service request is initiated by the entity other than the authorization entity. The authorization information is stored in an authorization information storage entity, the information associated with the AI/ML services is stored in an AI/ML service information storage entity, and the AI/ML service request is initiated by an AI/ML service request entity. Certainly, the authorization information and the information associated with the AI/ML services may also be stored in the authorization entity, and the AI/ML service request may also be initiated by the authorization entity, which is not limited in the present disclosure. As illustrated in FIG. 5, the method may include operations at S510 to S580.

At S510, the AI/ML service request entity initiates an AI/ML service request to the authorization entity. The AI/ML service request may be used for requesting transmission of the information associated with the AI/ML services to a terminal device. Alternatively, the AI/ML service request may be used for requesting acquisition of information of the terminal device for AI/ML operations. The AI/ML service request may carry an ID of the terminal device, such as a subscription permanent identifier (SUPI), a subscription concealed identifier (SUCI), or a generic public subscription identifier (GPSI), to clarify the terminal device to which the AI/ML service request is directed.

At S520, the authorization entity sends an authorization information request message to the authorization information storage entity. The authorization information request message may carry the ID of the terminal device, to clarify the terminal device to which the request message is directed.

At S530, the authorization information storage entity retrieves authorization information of the terminal device.

At S540, the authorization information storage entity sends the authorization information of the terminal device to the authorization entity.

At S550, the authorization entity checks the authorization information and determines whether to authorize the AI/ML service request. If the authorization entity determines to authorize the AI/ML service request, operations at S560 are to be performed.

At S560, the authorization entity sends a request message for the information associated with the AI/ML services/the information of the terminal device to the AI/ML service information storage entity. The request message may carry the ID of the terminal device, to clarify the terminal device to which the request is directed.

At S570, the AI/ML service information storage entity sends the information associated with the AI/ML services/the information of the terminal device to the authorization entity.

At S580, the authorization entity sends the information associated with the AI/ML services/the information of the terminal device to the AI/ML service request entity. It may be worth noting that, the AI/ML service information storage entity may also directly transmit the information associated with the AI/ML services to the terminal device (not illustrated in the figure).

Based on the method illustrated in FIG. 5, the authorization entity determines, based on the authorization information of the terminal device, an authorization mechanism for transmitting the information associated with the AI/ML services to the terminal device, or transmitting the information of the terminal device to the AI/ML service request entity, which is conducive to ensuring the security of the information associated with the AI/ML services and the information of the terminal device.

How to apply the method of embodiments of the present disclosure in different scenarios is exemplified below in combination with Embodiment 1 to Embodiment 4. In different scenarios, the AI/ML service information storage entity is different. In Embodiment 1 to Embodiment 3, the AI/ML service information storage entity is a network element in the CN. In Embodiment 4, the AI/ML service information storage entity is an entity (e.g., a base station) or an OAM in the AN. For ease of understanding, in the following, the authorization entity may also be referred to as "authorization node".

### Embodiment 1

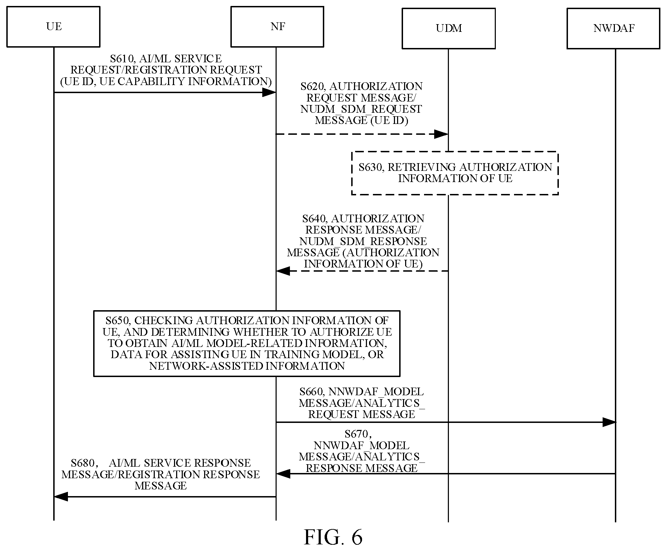

Embodiment 1 is applicable to a scenario in which a UE serves as a consumer of a network-side model (the model, model information), data for assisting the UE in training the model, or network-assisted information (such as communication link quality, QoS analysis, NWDAF prediction information, etc.), and needs to obtain related information from an NWDAF. Exemplarily, in Embodiment 1, the AI/ML service information storage entity is an NWDAF, the authorization node is an NF in the CN, such as an AMF, a PCF, an LMF, an NWDAF, or a UDM, the authorization information storage entity is a UDM, and the AI/ML service request entity is a UE. As illustrated in FIG. 6, the method in Embodiment 1 may include operations at S610 to S680.

At S610, the UE initiates a registration request or an AI/ML service request to the NF, to request acquisition of the AI/ML model-related information, the data for assisting the UE in training the model, or the network-assisted information, and the UE may carry a UE ID and UE capability information in the request.

At S620, the NF sends an authorization request message or an Nudm_SDM_Request message to the UDM, to request authorization information of the UE, and the NF may carry the UE ID in the request.

At S630, the UDM retrieves the authorization information of the UE.

At S640, the UDM sends an authorization response message or an Nudm_SDM_Response message to the NF, and the response message may carry the authorization information of the UE.

At S650, the NF checks the authorization information of the UE and determines whether to authorize the UE to obtain the AI/ML model-related information, the data for assisting the UE in training the model, or the network-assisted information. If the NF determines, based on the authorization information, to authorize the AI/ML service request from the UE, operations at S660 are to be performed.

At S660, the NF sends an Nnwdaf_model message or an analytics_Request message to the NWDAF, to request transmission of the AI/ML model-related information, the data for assisting the UE in training the model, or the network-assisted information to the terminal device.

At S670, the NWDAF sends the Nnwdaf_model message or the analytics_Response message to the NF. The NWDAF transmits the AI/ML model-related information, the data for assisting the UE in training the model, or the network-assisted information to the UE (not illustrated in the figure). The NWDAF may transmit the AI/ML model-related information, the data for assisting the UE in training the model, or the network-assisted information to the UE through control plane signaling, for example, in an NWDAF-AMF-UE manner. Alternatively, considering the size of the AI/ML model, the NWDAF may also transmit the AI/ML model-related information, the data for assisting the UE in training the model, or the network-assisted information to the UE through user plane data, for example, in a manner in which a UPF establishes a specific protocol data unit (PDU) session.

At S680, the NF sends an AI/ML service response message or a registration response message to the UE.

Based on the method in Embodiment 1, when the network transmits to the UE the AI/ML model-related information, the data for assisting the UE in training the model, or the network-assisted information from the NWDAF, the network may determine the legality of the UE based on the authorization information of the UE, which is conducive to ensuring the security of the AI/ML model-related information, the data for assisting the UE in training the model, or the network-assisted information.

### Embodiment 2

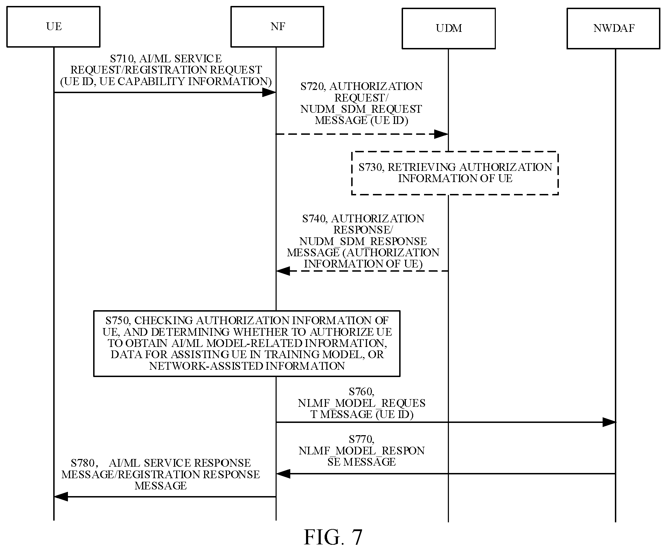

Embodiment 2 is applicable to a scenario in which a UE serves as a consumer of a network-side model (the model, model information) and network-assisted information (such as communication link quality, QoS analysis, NWDAF prediction information, etc.), and needs to obtain related information from an LMF. Exemplarily, Embodiment 2 is applicable to a sidelink (SL)-mobile originating-location request (SL-MO-LR) process in positioning services. For AI/ML-based positioning services, an AI/ML model may be stored in the LMF, and the authorization node at the network side may determine whether related information can be transmitted to the UE; alternatively, the LMF may obtain the model through the NWDAF, and the LMF may serve as the authorization node to determine whether the related information can be transmitted to the UE. With reference to FIG. 7, the method in Embodiment 2 is illustrated below with an example that the AI/ML service information storage entity is the LMF, the authorization node is an NF in the CN, such as an AMF, an LMF, or a UDM, the authorization information storage node is a UDM, and the AI/ML service request entity is a UE. As illustrated in FIG. 7, the method of embodiments of the present disclosure in Embodiment 2 may include operations at S710 to S780.

At S710, the UE initiates a registration request or an AI/ML service request to the NF, to request acquisition of the AI/ML model-related information, the data for assisting the UE in training the model, or the network-assisted information, and the UE may carry a UE ID and UE capability information in the request.

At S720, the NF sends an authorization request message or an Nudm_SDM_Request message to the UDM, to request authorization information of the UE, and the NF may carry the UE ID in the request, to clarify the terminal device to which the request is directed.

At S730, the UDM retrieves the authorization information of the UE.

At S740, the UDM sends an authorization response message or an Nudm_SDM_Response message to the NF, and the response message may carry the authorization information of the UE.

At S750, the NF checks the authorization information of the UE and determines whether to authorize the UE to obtain the AI/ML model-related information, the data for assisting the UE in training the model, or the network-assisted information. If the NF determines, based on the authorization information, to authorize the AI/ML service request from the UE, operations at S760 are to be performed.

At S760, the NF sends an Nlmf_model_Request message to the LMF. The NF may also carry the UE ID in the request, to clarify the terminal device to which the request is directed.

At S770, the LMF sends an Nlmf_model Response message to the NF. The LMF sends the AI/ML model-related information, the data for assisting the UE in training the model, or the network-assisted information to the UE (not illustrated in the figure).

At S780, the NF sends an AI/ML service response message or a registration response message to the UE.

Based on the method in Embodiment 2, when the network transmits to the UE the AI/ML model-related information, the data for assisting the UE in training the model, or the network-assisted information from the LMF, the network may determine the legality of the UE based on the authorization information of the UE, which is conducive to ensuring the security of the AI/ML model-related information, the data for assisting the UE in training the model, or the network-assisted information.

### Embodiment 3

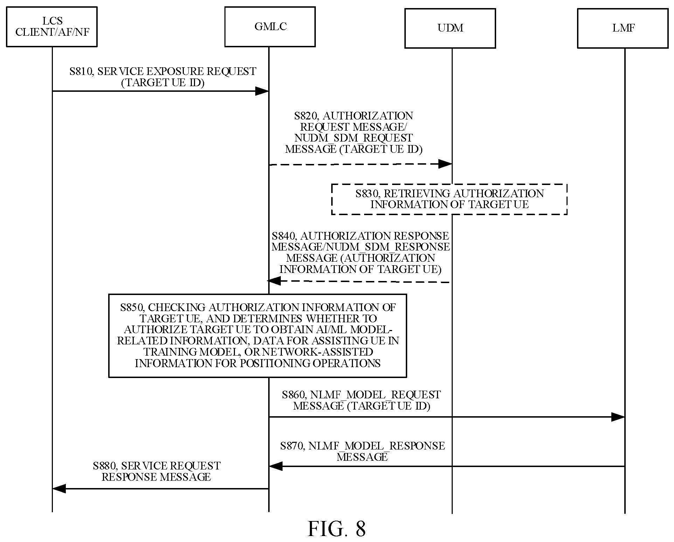

Embodiment 3 is applicable to a scenario in which an external client or a CN network element initiates a service exposure request to a network, to request the transmission of AI/ML-related information from the network side to the UE. For example, in a mobile terminating-location request (MT-LR) process, an LCS client, an AF, or an NF (such as an NWDAF) may initiate a service exposure request to the network, to request acquisition of location information of a target UE. In this scenario, the network may transmit to the target UE AI/ML model-related information, data for assisting the UE in training a model, or network-assisted information that can improve positioning accuracy, such that the target UE can calculate the location information of the target UE based on the AI/ML model. In addition, a GMLC at the network side may determine the legality of the target UE based on authorization information of the target UE. With reference to FIG. 8, the method in Embodiment 3 is introduced below with an example that the AI/ML service information storage entity is an LMF, the authorization node is a GMLC in the CN, the authorization information storage node is a UDM, and the AI/ML service request entity is an LCS client/AF/NF. As illustrated in FIG. 8, the method in Embodiment 3 may include operations at S810 to S880.

At S810, the LCS client/AF/NF initiates a service exposure request to the GMLC, to request acquisition of the location information of the target UE, and the request may carry the target UE ID.

At S820, the GMLC sends an authorization request message or an Nudm_SDM_Request message to the UDM, to request the authorization information of the target UE. The GMLC may carry the target UE ID in the request, to clarify the terminal device to which the request is directed.

At S830, the UDM retrieves the authorization information of the target UE.

At S840, the UDM sends an authorization response message or an Nudm_SDM_Response message to the GMLC, and the response message may carry the authorization information of the target UE.

At S850, the GMLC checks the authorization information of the target UE and determines whether to authorize the target UE to obtain the AI/ML model-related information, the data for assisting the UE in training the model, or the network-assisted information for positioning operations. If the GMLC determines to authorize the target UE to obtain the AI/ML model-related information, the data for assisting the UE in training the model, or the network-assisted information, operations at S860 are to be performed.

At S860, the GMLC sends an Nlmf_model_Request message to the LMF, to request the transmission of the AI/ML model-related information, the data for assisting the UE in training the model, or the network-assisted information to the target UE. The GMLC may also carry the target UE ID in the request, to clarify the terminal device to which the request is directed.

At S870, the LMF sends an Nlmf_model Response message to the GMLC. The LMF sends the AI/ML model-related information, the data for assisting the UE in training the model, or the network-assisted information to the target UE (not illustrated in the figure).

At S880, the GMLC sends a service request response message to the LCS client/AF/NF.

It may be worth noting that, in the SL-MT-LR process, the process of the GMLC checking the authorization information of the target UE may be performed together with a process of the GMLC checking subscription data of the target UE.

In addition, in SL positioning, the LMF may determine whether a serve UE is to calculate a positioning result. Therefore, in AI-based positioning enhancement, the network may also transmit the AI/ML model-related information, the data for assisting the UE in training the model, or the network-assisted information that can improve positioning accuracy to the server UE, such that the server UE can calculate the location information of the target UE based on the AI/ML model. Therefore, in the method in Embodiment 3, the GMLC at the network side may also determine the legality of the server UE based on authorization information of the server UE.

Based on the method in Embodiment 3, during a 5GC-MT-LR process, when the network transmits the AI/ML model-related information, the data for assisting the UE in training the model, or the network-assisted information to the UE, the network may determine the legality of the UE based on the authorization information of the UE, which is conducive to ensuring the security of the AI/ML model-related information, the data for assisting the UE in training the model, or the network-assisted information.

### Embodiment 4

Embodiment 4 is applicable to a scenario in which the AI/ML model-related information is stored in an AN or an OAM. For example, for a beam management process or a CSI feedback process, an RAN side already has an AI/ML function. That is, when the RAN side already has a related model, the RAN may transmit AI/ML model-related information, data for assisting a UE in training a model, or network-assisted information to the UE. Alternatively, the AI/ML model may also be stored in the OAM. The AI/ML model-related information, the data for assisting the UE in training the model, or the network-assisted information may be transmitted to the RAN side by the OAM, and then transmitted to the UE by the RAN side. As such, a gNB or the OAM on the RAN side may serve as the authorization node, and determine, based on authorization information of the UE that is stored locally or obtained through the UDM or an AMF in the CN, whether to authorize the transmission of the AI/ML model-related information, the data for assisting the UE in training the model, or the network-assisted information to the UE. Alternatively, when the gNB or the OAM is not the authorization node, the gNB or the OAM may send an authorization request to the network side. An NF network element (such as an AMF, an LMF) at the network side returns an authorization result to the gNB or the OAM upon authorization, and then the gNB or the OAM determines, based on the authorization result, whether the AI/ML model, the data for assisting the UE in training the model, or the network-assisted information can be transmitted to the UE. In addition, the gNB may also determine, based on an authorization result from the OAM, whether the AI/ML model, the data for assisting the UE in training the model, or the network-assisted information can be transmitted to the UE.

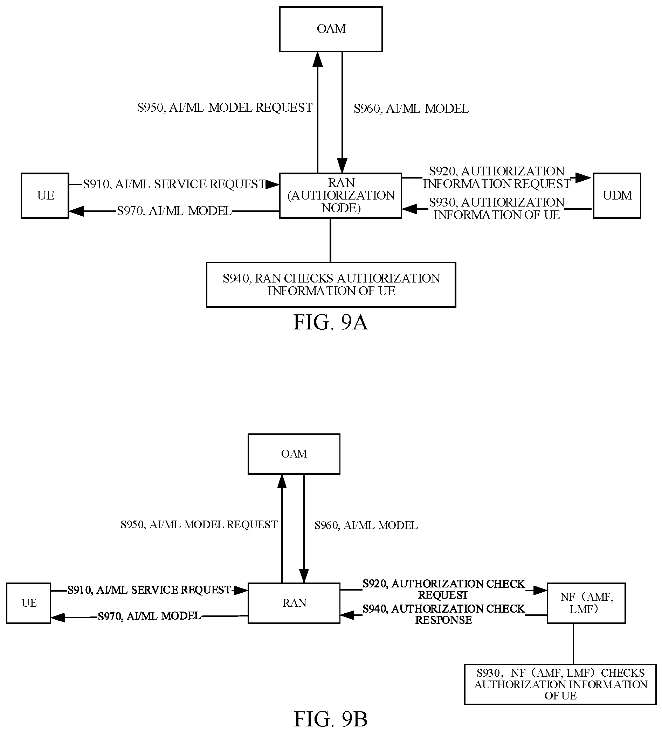

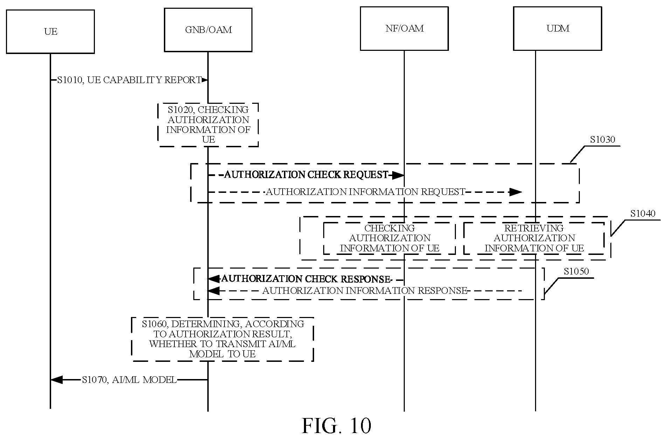

The method in Embodiment 4 is illustrated in detail below with reference to FIG. 9 and FIG. 10. Exemplarily, in Embodiment 4, the AI/ML service information storage entity is an OAM, the authorization node is a gNB in the AN or an NF or an OAM in the CN, the authorization information storage node is a UDM, and the AI/ML service request entity is a UE.

An interaction process between various entities in Embodiment 4 may be as illustrated in FIG. 9A. The interaction process may include operations at S910 to S970.

At S910, the UE initiates an AI/ML service request to the RAN side, to request an AI/ML model.

At S920, the RAN sends an authorization information request to the UDM in the CN.

At S930, the UDM in the CN returns authorization information of the UE to the RAN.

At S940, the RAN checks the authorization information of the UE and determines whether to authorize the AI/ML service request from the UE. If the RAN determines to authorize the AI/ML service request from the UE, operations at S950 are to be performed.

At S950, the RAN sends an AI/ML model request to the OAM.

At S960, the OAM returns the AI/ML model to the RAN.

At S970, the RAN returns the AI/ML model to the UE.

An interaction process between various entities in Embodiment 4 may also be as illustrated in FIG. 9B. The interaction process may include operations at S910 to S970.

At S910, the UE initiates an AI/ML service request to the RAN side, to request an AI/ML model.

At S920, the RAN sends an authorization check request to the NF (e.g., an AMF, an LMF) in the CN.

At S930, the NF (e.g., the AMF, the LMF) checks authorization information of the UE.

At S940, the NF in the CN returns an authorization check response to the RAN.

At S950, the RAN sends an AI/ML model request to the OAM.

At S960, the OAM returns the AI/ML model to the RAN.

At S970, the RAN returns the AI/ML model to the UE.

The RAN in the method illustrated in FIG. 9 may also be replaced by the OAM, and a corresponding method may not include operations at S950 to S960.

Further, a detailed process of the method in Embodiment 4 may be as illustrated in FIG. 10, and the detailed process may include operations at S1010 to S1070.

At S1010, a UE initiates a UE capability report to a gNB. The UE capability report may trigger an AI/ML service request to request an AI/ML model. An authorization process of the network side for the AI/ML service request triggered by the UE may include the following three cases.

In a case where the gNB is the authorization node, if the gNB locally stores authorization information of the UE, operations at S1020 are to be performed, that is, the gNB checks the authorization information of the UE. At S1060, the gNB determines, according to an authorization result, whether to transmit the AI/ML model to the UE. At S1070, the gNB transmits the AI/ML model to the UE.

In a case where the gNB is the authorization node, if the gNB does not store the authorization information of the UE locally, operations at S1030 are to be performed, that is, the gNB sends an authorization information request to a UDM in the CN. At S1040, the UDM retrieves the authorization information of the UE. At S 1050, the UDM sends an authorization information response to the gNB. Then, the gNB checks the authorization information of the UE again, and at S1070, the gNB transmits the AI/ML model to the UE.

In a case where the gNB is not the authorization node, operations at S1030 are to be performed, that is, the gNB sends an authorization check request to an NF or an OAM in the CN. At S1040, the NF or the OAM in the CN checks the authorization information of the UE. At S1050, the NF or the OAM in the CN returns an authorization check response to the gNB. At S1060, the gNB determines, according to the authorization result, whether to transmit the AI/ML model to the UE. At S1070, the gNB transmits the AI/ML model to the UE.

It may be worth noting that, the gNB in the method illustrated in FIG. 10 may also be replaced by the OAM. In the case where the OAM is not the authorization node, at S 1030, the OAM sends the authorization check request to the NF.

Based on the method in Embodiment 4, when the gNB or the OAM transmits the AI/ML model to the UE, the legality of UE may be determined based on the authorization information of the UE, which is beneficial to ensuring the security of the AI/ML model.

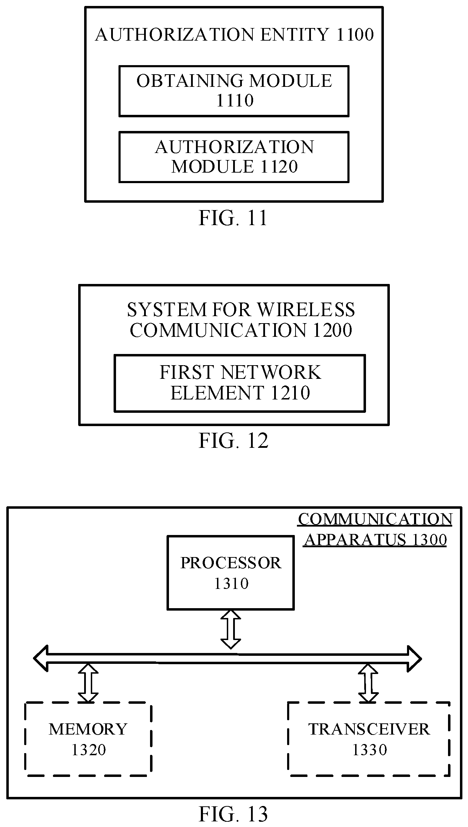

The method embodiments of the present disclosure are illustrated in detail above with reference to FIG. 1 to FIG. 10, and apparatus embodiments of the present disclosure will be illustrated in detail below with reference to FIG. 11 to FIG. 13. It may be understood that, illustrations of method embodiments and illustrations of apparatus embodiments correspond to each other, and therefore, for parts not illustrated in detail, reference can be made to the foregoing method embodiments.

FIG. 11 is a schematic structural diagram of an authorization entity provided in embodiments of the present disclosure. The authorization entity 1100 in FIG. 11 includes an obtaining module 1110 and an authorization module 1120. The obtaining module 1110 is configured to obtain authorization information of a terminal device. The authorization module 1120 is configured to determine, based on the authorization information, whether to authorize an AI/ML service request related to the terminal device. The AI/ML service request is used for requesting transmission of information associated with AI/ML services to the terminal device, and/or the AI/ML service request is used for requesting acquisition of information of the terminal device for AI/ML operations.

In some embodiments, the authorization information includes AI/ML subscription data of the terminal device and/or AI/ML configuration information of the terminal device.

In some embodiments, the AI/ML subscription data includes at least one of: information indicating that the terminal device is allowed to use the AI/ML services, a set of PLMNs in which the terminal device is allowed to use the AI/ML services, AI/ML model information, or a service type to which an AI/ML model is applicable.

In some embodiments, the AI/ML configuration information includes at least one of: information indicating whether the terminal device is allowed for AI/ML model transmission, or information indicating whether the terminal device is allowed for AI/ML model training.

In some embodiments, the AI/ML configuration information is determined based on LCS privacy configuration information.

In some embodiments, the AI/ML configuration information includes an LPI in the LCS privacy configuration information, and the LPI indicates whether the terminal device is allowed to perform AI/ML model-based positioning operation.

In some embodiments, the information associated with the AI/ML services includes at least one of: AI/ML model-related information, or network-assisted information used for assisting the AI/ML services.

In some embodiments, the authorization information is determined based on subscription data of the terminal device, and/or the authorization information is determined based on an indication from the terminal device.

FIG. 12 is a schematic structural diagram of a system for wireless communication provided in embodiments of the present disclosure. The system for wireless communication 1200 in FIG. 12 includes a first network element 1210. The first network element 1210 is configured to obtain authorization information of a terminal device based on an AI/ML service request related to the terminal device. The first network element 1210 is configured to determine, based on the authorization information, whether to authorize the AI/ML service request. The AI/ML service request is used for requesting transmission of information associated with AI/ML services to the terminal device, and/or the AI/ML service request is used for requesting acquisition of information of the terminal device for AI/ML operations.

In some embodiments, the system further includes a second network element 1220. The second network element 1220 is configured to initiate the AI/ML service request to the first network element 1210.

In some embodiments, the system further includes a third network element 1230. The third network element 1230 is configured to store the information associated with the AI/ML services, and transmit the information associated with the AI/ML services to the terminal device based on the authorization of the AI/ML service request by the first network element 1210.

In some embodiments, the system further includes a fourth network element 1240. The fourth network element 1240 is configured to store the authorization information, and transmit the authorization information to the first network element 1210 based on a request from the first network element 1210.

In some embodiments, the authorization information includes AI/ML subscription data of the terminal device and/or AI/ML configuration information of the terminal device.

In some embodiments, the AI/ML subscription data includes at least one of: information indicating that the terminal device is allowed to use the AI/ML services, a set of PLMNs in which the terminal device is allowed to use the AI/ML services, AI/ML model information, or a service type to which an AI/ML model is applicable.

In some embodiments, the AI/ML configuration information includes at least one of: information indicating whether the terminal device is allowed for AI/ML model transmission, or information indicating whether the terminal device is allowed for AI/ML model training.

In some embodiments, the AI/ML configuration information is determined based on LCS privacy configuration information.

In some embodiments, the AI/ML configuration information includes an LPI in the LCS privacy configuration information, and the LPI indicates whether the terminal device is allowed to perform AI/ML model-based positioning operation.

In some embodiments, the information associated with the AI/ML services includes at least one of: AI/ML model-related information, or network-assisted information used for assisting the AI/ML services.

In some embodiments, the authorization information is determined based on subscription data of the terminal device, and/or the authorization information is determined based on an indication from the terminal device.

FIG. 13 is a schematic structural diagram of a communication apparatus provided in embodiments of the present disclosure. The communication apparatus 1300 in FIG. 13 may be configured to implement the method illustrated in the method embodiments. The apparatus 1300 may be a chip, a terminal device, or a base station.

The communication apparatus 1300 may include one or more processors 1310. The processor 1310 may support the apparatus 1300 to implement the method illustrated in the method embodiments. The processor 1310 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any conventional processor, etc.

The communication apparatus 1300 may further include one or more memories 1320. The memory 1320 is configured to store a program which, when executed by the processor 1310, causes the processor 1310 to perform the method in the method embodiments. The memory 1320 may be independent of the processor 1310 or may be integrated into the processor 1310.

The communication apparatus 1300 may further include a transceiver 1330. The processor 1310 may communicate with other devices or chips through the transceiver 1330. For example, the processor 1310 may send data to and receive data from other devices or chips through the transceiver 1330.

It may be understood that, in embodiments of the present disclosure, the processor 1310 may use a general-purpose CPU, a microprocessor, an ASIC, or one or more integrated circuits, to execute a related program to implement the technical solutions provided in embodiments of the present disclosure.

The memory 1320 may include a read-only memory (ROM) and a random access memory (RAM), and may provide instructions and data for the processor 1310. A portion of the processor 1310 may further include a non-volatile RAM. For example, the processor 1310 may further store type information of a device.

During implementation, each step of the foregoing methods may be completed by an integrated logic circuit of hardware in the processor 1310 or an instruction in the form of software. The method for requesting uplink transmission resources disclosed in embodiments of the present disclosure may be directly implemented by a hardware processor, or may be performed by hardware and software modules in the processor. The software module can be located in a storage medium such as an RAM, a flash memory, an ROM, a programmable ROM (PROM), or an electrically erasable programmable memory, registers, etc. The storage medium is located in the memory 1320. The processor 1310 reads the information in the memory 1320, and completes the steps of the method mentioned above with the hardware thereof, which will not be repeated in detail herein for the sake of brevity.

It may be understood that, in embodiments of the present disclosure, the processor 1310 may be a CPU. Alternatively, the processor may also be another general-purpose processor, a DSP, an ASIC, an FPGA, or other programmable logic devices, discrete gates or transistor logic devices, discrete hardware components, etc. The general-purpose processor may be a microprocessor, the processor may be any conventional processor, etc.

A computer-readable storage medium is further provided in embodiments of the present disclosure. The computer-readable storage medium is configured to store a computer program. The computer-readable storage medium is applicable to the terminal device or the network device provided in embodiments of the present disclosure. The computer program causes a computer to perform the method for wireless communication performed by the authorization entity in various embodiments of the present disclosure.

A computer program product is further provided in embodiments of the present disclosure. The computer program product includes a program. The computer program product is applicable to the terminal device or the network device provided in embodiments of the present disclosure. The program causes a computer to perform the method for wireless communication performed by the authorization entity in various embodiments of the present disclosure.

A computer program is further provided in embodiments of the present disclosure. The computer program is applicable to the terminal device or the network device provided in embodiments of the present disclosure. The computer program causes a computer to perform the method for wireless communication performed by the authorization entity in various embodiments of the present disclosure.

It may be understood that, all or some of functions of the communications device in the present disclosure may also be implemented by software functions running on hardware, or by virtualization functions implemented on a platform (e.g., a cloud platform).

It may be understood that, the terms "system" and "network" herein are usually used interchangeably throughout this disclosure. In addition, the terms used in the present disclosure are merely intended for explaining embodiments of the present disclosure rather than limiting the present disclosure. The terms "first", "second", "third", "fourth", etc., used in the specification, the claims, and the accompanying drawings of the present disclosure are used to distinguish different objects rather than describe a particular order. Moreover, the terms "include", "comprise", and "have" as well as variations thereof are intended to cover a non-exclusive inclusion.

In embodiments of the present disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the present disclosure, the term "include" or "comprise" may refer to direct inclusion or indirect inclusion. Optionally, the "include" or "comprise" mentioned in embodiments of the present disclosure may be replaced with "indicate" or "configured to determine". For example, A includes B, which may be replaced with A indicates B, or A is configured to determine B.

In various embodiments of the present disclosure, the magnitude of a sequence number of each of the foregoing processes does not mean an execution order, and an execution order of each process should be determined according to a function and an internal logic of the process, which shall not constitute any limitation to an implementation process of embodiments of the present disclosure.

It will be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer can be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium may be any computer-accessible usable medium or a data storage device, such as a server, a data center, etc., that integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication performed by an authorization entity, comprising:
obtaining authorization information of a terminal device; and
determining, based on the authorization information, whether to authorize an artificial intelligence (Al)/machine learning (ML) service request related to the terminal device, wherein the AI/ML service request is used for requesting transmission of information associated with AI/ML services to the terminal device, and/or the AI/ML service request is used for requesting acquisition of information of the terminal device for AI/ML operations.

2. The method of claim 1, wherein the authorization information comprises AI/ML subscription data of the terminal device and/or AI/ML configuration information of the terminal device.

3. The method of claim 2, wherein the AI/ML subscription data comprises at least one of:
information indicating that the terminal device is allowed to use the AI/ML services;
a set of public land mobile networks (PLMNs) in which the terminal device is allowed to use the AI/ML services;
AI/ML model information; or
a service type to which an AI/ML model is applicable.

4. The method of claim 2, wherein the AI/ML configuration information comprises at least one of:
information indicating whether the terminal device is allowed for AI/ML model transmission; or
information indicating whether the terminal device is allowed for AI/ML model training.

5. The method of claim 2, wherein the AI/ML configuration information is determined based on location service (LCS) privacy configuration information.

6. The method of claim 5, wherein the AI/ML configuration information comprises a location privacy indication (LPI) in the LCS privacy configuration information, and the LPI indicates whether the terminal device is allowed to perform AI/ML model-based positioning operation.

7. The method of claim 1, wherein the information associated with the AI/ML services comprises at least one of:
AI/ML model-related information; or
network-assisted information used for assisting the AI/ML services.

8. The method of claim 1, wherein the authorization information is determined based on subscription data of the terminal device, and/or the authorization information is determined based on an indication from the terminal device.

9. An authorization entity, comprising:
an obtaining module configured to obtain authorization information of a terminal device; and
an authorization module configured to determine, based on the authorization information, whether to authorize an artificial intelligence (AI)/machine learning (ML) service request related to the terminal device, wherein the AI/ML service request is used for requesting transmission of information associated with AI/ML services to the terminal device, and/or the AI/ML service request is used for requesting acquisition of information of the terminal device for AI/ML operations.

10. The authorization entity of claim 9, wherein the authorization information comprises AI/ML subscription data of the terminal device and/or AI/ML configuration information of the terminal device.

11. The authorization entity of claim 10, wherein the AI/ML subscription data comprises at least one of:
information indicating that the terminal device is allowed to use the AI/ML services;
a set of public land mobile networks (PLMNs) in which the terminal device is allowed to use the AI/ML services;
AI/ML model information; or
a service type to which an AI/ML model is applicable.

12. The authorization entity of claim 10, wherein the AI/ML configuration information comprises at least one of:
information indicating whether the terminal device is allowed for AI/ML model transmission; or
information indicating whether the terminal device is allowed for AI/ML model training.

13. The authorization entity of claim 10, wherein the AI/ML configuration information is determined based on location service (LCS) privacy configuration information.

14. The authorization entity of claim 13, wherein the AI/ML configuration information comprises a location privacy indication (LPI) in the LCS privacy configuration information, and the LPI indicates whether the terminal device is allowed to perform AI/ML model-based positioning operation.

15. The authorization entity of claim 9, wherein the information associated with the AI/ML services comprises at least one of:
AI/ML model-related information; or
network-assisted information used for assisting the AI/ML services.

16. The authorization entity of claim 9, wherein the authorization information is determined based on subscription data of the terminal device, and/or the authorization information is determined based on an indication from the terminal device.

17. A system for wireless communication, comprising:
a first network element configured to:
obtain authorization information of a terminal device based on an artificial intelligence (Al)/machine learning (ML) service request related to the terminal device; and
determine, based on the authorization information, whether to authorize the AI/ML service request; wherein
the AI/ML service request is used for requesting transmission of information associated with AI/ML services to the terminal device, and/or the AI/ML service request is used for requesting acquisition of information of the terminal device for AI/ML operations.

18. The system for wireless communication of claim 17, further comprising:
a second network element configured to initiate the AI/ML service request to the first network element.

19. The system for wireless communication of claim 17, further comprising:
a third network element configured to:
store the information associated with the AI/ML services; and
transmit the information associated with the AI/ML services to the terminal device based on the authorization of the AI/ML service request by the first network element.

20. The system for wireless communication of claim 17, further comprising:
a fourth network element configured to:
store the authorization information; and
transmit the authorization information to the first network element based on a request from the first network element.

21. The system for wireless communication of claim 17, the authorization information comprises AI/ML subscription data of the terminal device and/or AI/ML configuration information of the terminal device.

22. The system for wireless communication of claim 21, wherein the AI/ML subscription data comprises at least one of:
information indicating that the terminal device is allowed to use the AI/ML services;
a set of public land mobile networks (PLMNs) in which the terminal device is allowed to use the AI/ML services;
AI/ML model information; or
a service type to which an AI/ML model is applicable.

23. The system for wireless communication of claim 21, wherein the AI/ML configuration information comprises at least one of:
information indicating whether the terminal device is allowed for AI/ML model transmission; or
information indicating whether the terminal device is allowed for AI/ML model training.

24. The system for wireless communication of claim 21, wherein the AI/ML configuration information is determined based on location service (LCS) privacy configuration information.

25. The system for wireless communication of claim 21, wherein the AI/ML configuration information comprises a location privacy indication (LPI) in an LCS privacy configuration information, and the LPI indicates whether the terminal device is allowed to perform AI/ML model-based positioning operation.

26. The system for wireless communication of claim 17, wherein the information associated with the AI/ML services comprises at least one of:
AI/ML model-related information; or
network-assisted information used for assisting the AI/ML services.

27. The system for wireless communication of claim 17, wherein the authorization information is determined based on subscription data of the terminal device, and/or the authorization information is determined based on an indication from the terminal device.

28. A communication device, comprising:
a memory configured to store a program; and
a processor configured to invoke the program stored in the memory, to cause the communication device to perform the method of any one of claims 1 to 8.
